# EUROPEAN PATENT APPLICATION

(11) **EP 4 434 623 A1**
(43) Date of publication of application: **25.09.2024**
(21) Application number: 22892591.3
(22) Date of filing: 26.10.2022
(51) Int. Cl.: B01J 37/02, B01D 53/94, B01J 27/053, F01N 3/10, F01N 3/28

(54) **EXHAUST GAS PURIFICATION CATALYST, METHOD FOR PURIFYING EXHAUST GAS, AND METHOD FOR PRODUCING EXHAUST GAS PURIFICATION CATALYST**

(30) Priority: 15.11.2021 JP 2021185713
(71) Applicant: Umicore Shokubai Japan Co., Ltd., Tokoname-shi Aichi 479-0882 (JP)
(72) Inventor: TOMIDA, Yasutaka, Kobe-shi, Hyogo 650-0047 (JP); KUNO, Hirotaka, Kobe-shi, Hyogo 650-0047 (JP)
(74) Representative: Banse & Steglich Patentanwälte PartmbB
(86) International application number: PCT/JP2022/039916
(87) International publication number: WO 2023/085091

(57) **Abstract**

An exhaust gas purification catalyst (10) contains a refractory three-dimensional structure (20), a second catalyst layer (31) containing palladium and rhodium, and a first catalyst layer (32) containing palladium positioned between the refractory three-dimensional structure (20) and the second catalyst layer (31), in which the first catalyst layer (32) or the second catalyst layer (31) further contains a Zr-Pr composite oxide that is a composite oxide of zirconium and praseodymium. A proportion of a mass of praseodymium oxide contained in the Zr-Pr composite oxide relative to a total mass of zirconium oxide and praseodymium oxide contained in the Zr-Pr composite oxide may be 11% or more and 90% or less.

## Description

### Technical Field

The present invention relates to an exhaust gas purification catalyst, a method for purifying exhaust gas, and a method for producing an exhaust gas purification catalyst.

### Background Art

Due to exhaust gas regulations, exhaust gas emitted from internal combustion engines of automobiles and the like is required to be purified to a high degree. For gasoline engine vehicles, for example, a three-way catalyst is known, which simultaneously purifies the three components of carbon monoxide (CO), hydrocarbons (HC), and nitrogen oxides (NOₓ) in exhaust gas. Typically, a three-way catalyst contains a precious metal such as palladium, an oxygen storage component (OSC) such as a cerium-zirconium composite oxide, and an alumina serving as a support material for the precious metal.

However, exhaust gas regulations are tightening worldwide year by year and are expected to tighten further in the future. For example, a catalyst is desired to have a function of purifying exhaust gas despite rapid changes in exhaust gas temperature from low temperature to high temperature. Therefore, there is a demand for the development of catalysts having a superior purification performance of exhaust gas.

As one of problems that conventional three-way catalysts have, there is a problem in which it is difficult to lower the light-off temperature for the purification of exhaust gas. As a solution for such a problem, for example, increasing the amount of catalyst metal can be considered. However, when increasing the amount of the catalyst metal, this causes the problem of increasing the cost of the exhaust gas catalyst.

For the purpose of lowering the light-off temperature while suppressing the amount of catalyst metal, PTL 1 discloses an exhaust gas purification catalyst containing a Zr-Pr composite oxide on which a catalyst metal such as Pd is supported.

### Citation List

### Patent Literature

PTL 1: JP2006-068728A

### Summary of Invention

### Technical Problem

However, the exhaust gas purification catalyst disclosed in PTL 1 cannot be said to have sufficient light-off performance, and the demand for improving the light-off performance still remained.

The present disclosure has been made in view of the above problems, and an objective thereof is to provide an exhaust gas purification catalyst having improved light-off performance, a method for purifying exhaust gas using an exhaust gas purification catalyst having improved light-off performance, and a method for producing exhaust gas purification catalyst having improved light-off performance.

### Solution to the Problem

In order to solve these problems, the present inventors conducted extensive studies. As a result, it was found that in an exhaust gas purification catalyst containing palladium, rhodium, and a Zr-Pr composite oxide that is a composite oxide of zirconium and praseodymium (hereinafter, Zr-Pr composite oxide) with a predetermined arrangement, light-off performance of the catalyst improves. In view of the foregoing information, the following embodiments are employed in the present application to solve the problems described above.

(1) An exhaust gas purification catalyst according to a first embodiment contains a refractory three-dimensional structure, a second catalyst layer containing palladium and rhodium, and a first catalyst layer containing palladium positioned between the refractory three-dimensional structure and the second catalyst layer, in which the first catalyst layer or the second catalyst layer further contains a Zr-Pr composite oxide.
(2) In the exhaust gas purification catalyst according to the above-described embodiment, a proportion of mass of a praseodymium oxide (in terms of Pr₆O₁₁) contained in the Zr-Pr composite oxide relative to a total mass of zirconium oxide and praseodymium oxide (in terms of ZrO₂ and Pr₆O₁₁) contained in the Zr-Pr composite oxide may be 11% or more and 90% or less.
(3) In the exhaust gas purification catalyst according to the above-described embodiment, an amount of palladium contained in the second catalyst layer may be 0.1 g or more and 15.0 g or less per 1 liter of the refractory three-dimensional structure, an amount of rhodium contained in the second catalyst layer may be 0.05 g or more and 5.0 g or less per 1 liter of the refractory three-dimensional structure, and an amount of palladium contained in the first catalyst layer may be 0.5 g or more and 15.0 g or less per 1 liter of the refractory three-dimensional structure.
(4) In the exhaust gas purification catalyst according to the above-described embodiment, an amount of the Zr-Pr composite oxide may be 10 g or more and 80 g or less per 1 liter of the refractory three-dimensional structure.
(5) In the exhaust gas purification catalyst according to the above-described embodiment, the amount of the Zr-Pr composite oxide in the first catalyst layer or the second catalyst layer containing the Zr-Pr composite oxide may be 5 mass% or more and 50 mass% or less.
(6) In the exhaust gas purification catalyst according to the above-described embodiment, the second catalyst layer may contain the Zr-Pr composite oxide.
(7) A method for purifying exhaust gas according to a second embodiment includes using the exhaust gas purification catalyst according to the above-described embodiment.
(8) A method for producing the exhaust gas purification catalyst according to a third embodiment includes a first step of applying a first slurry on a surface of a refractory three-dimensional structure and drying and calcining the applied first slurry to form a first catalyst layer, and a second step of applying a second slurry on a surface of the first catalyst layer and drying and calcining the applied second slurry to form a second catalyst layer, in which the first slurry contains a palladium compound, the second slurry contains a palladium compound and a rhodium compound, and the first slurry or the second slurry further contains a Zr-Pr composite oxide.

### Advantageous Effects of the Invention

The exhaust gas purification catalyst according to the present disclosure has an improved light-off performance.

In the method for purifying exhaust gas according to the present disclosure, the light-off temperature is lowered.

The method for producing exhaust gas purification catalyst according to the present disclosure can provide an exhaust gas purification catalyst having an improved light-off performance.

### Brief Description of Drawings

[Fig. 1] Fig. 1 is a schematic cross-sectional view of an exhaust gas purification catalyst 10.
[Fig. 2] Fig. 2 is a figure showing T50 regarding carbon monoxide (CO) of exhaust gas purification catalysts produced in Examples and Comparative Examples.
[Fig. 3] Fig. 3 is a figure showing T50 regarding hydrocarbons (HC) of exhaust gas purification catalysts produced in Examples and Comparative Examples.
[Fig. 4] Fig. 4 is a figure showing T50 regarding nitrogen oxides (NOₓ) of exhaust gas purification catalysts produced in Examples and Comparative Examples.
[Fig. 5] Fig. 5 is a figure showing measurement results by a temperature programmed reaction method (TPR method).
[Fig. 6] Fig. 6 is a figure showing measurement results by the temperature programmed reaction method (TPR method).
[Fig. 7] Fig. 7 is a figure showing measurement results by the temperature programmed reaction method (TPR method).

### Description of Embodiments

Hereinafter, embodiments of the present application will be described in detail with reference to the figures where appropriate. In the figures used in the following description, characteristic parts may be enlarged and illustrated for convenience in order to make the features of the invention easier to understand, and the dimensional ratio or the like of each element may be different from the actual one. The materials, dimensions, etc. exemplified in the following description are examples, and the invention is not limited thereto, and can be appropriately modified and implemented to the extent that the gist thereof is not changed.

### [Exhaust Gas Purification Catalyst]

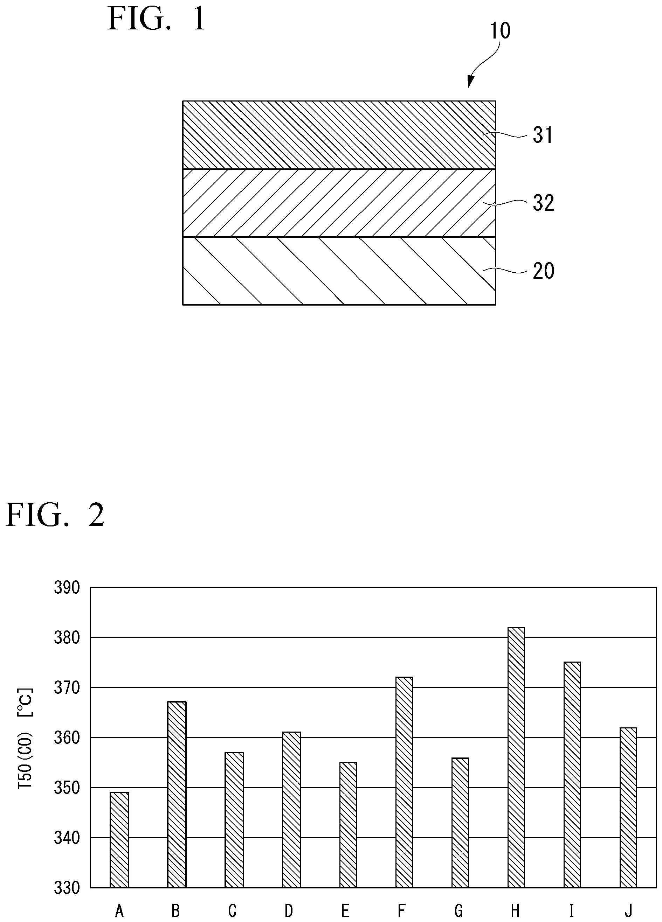

Fig. 1 is a schematic cross-sectional view of an exhaust gas purification catalyst 10 according to the present embodiment. The exhaust gas purification catalyst 10 contains a refractory three-dimensional structure 20, a second catalyst layer 31, and a first catalyst layer 32 positioned between the refractory three-dimensional structure 20 and the second catalyst layer 31.

### "Refractory Three-Dimensional Structure"

The exhaust gas purification catalyst according to the embodiment contains a refractory three-dimensional structure. For example, the refractory three-dimensional structure may be a structure having openings inside it, through which exhaust gas can flow. The refractory three-dimensional structure may be the same as that used in a typical catalyst for exhaust gas purification.

A total length of the refractory three-dimensional structure is not particularly limited, and is preferably 10 mm or more and 1000 mm or less, more preferably 15 mm or more and 300 mm or less, and further preferably 20 mm or more and 200 mm or less. The refractory three-dimensional structure may have a honeycomb-like structure. The "total length of the refractory three-dimensional structure" is the length of the refractory three-dimensional structure from the inlet side to the outlet side of the exhaust gas.

The number of holes (cells) in an opening section of the refractory three-dimensional structure may be set within an appropriate range in consideration of the type of exhaust gas to be treated, gas flow rate, pressure loss, removal efficiency, and the like. For example, a cell density (number of cells/unit cross-sectional area) of 100 cells/square inch or more and 1200 cells/square inch or less is sufficient for use, and it is preferably 200 cells/square inch or more and 900 cells/square inch or less and further preferably 400 cells/square inch or more and 900 cells/square inch or less. The shape (cell shape) of the hole can be hexagonal, rectangular, triangular, corrugated, or the like.

The material of the refractory three-dimensional structure may be the same as that typically used in a catalyst for exhaust gas purification. The refractory three-dimensional structure may be made of metal, ceramic, or the like, and preferably cordierite, stainless steel, or silicon carbide (SiC). When the material of the refractory three-dimensional structure is cordierite, stainless steel, or SiC, durability improves.

### "Catalyst Layer"

The exhaust gas purification catalyst 10 according to the embodiment contains the second catalyst layer 31 containing palladium (Pd) and rhodium (Rh), and the first catalyst layer 32 containing palladium positioned between the refractory three-dimensional structure 20 and the second catalyst layer 31. Hereinafter, the second catalyst layer 31 and the first catalyst layer 32 are also collectively referred to as the "catalyst layer". The second catalyst layer 31 or the first catalyst layer 32 further contains a Zr-Pr composite oxide. In the exhaust gas purification catalyst 10 according to the embodiment, light-off performance is improved since the second catalyst layer 31 and the first catalyst layer 32 have predetermined configurations.

For example, the improvement of light-off performance can be understood as the following. Namely, the first catalyst layer or the second catalyst layer contains Pd and the Zr-Pr composite oxide, and thereby when exhaust gas flows through the exhaust gas purification catalyst, oxygen contained in the exhaust gas forms a composite (Pr-O-Pd) with Pd and praseodymium (Pr). It is considered that the oxygen is preferentially incorporated in the composite to suppress the oxidation of Rh contained in the catalyst layer. Rh can more efficiently purify exhaust gas when it is in a more reduced state. Therefore, by suppressing the oxidation of Rh, light-off performance in the exhaust gas purification catalyst according to the embodiment is improved. Further, the exhaust gas purification catalyst according to the embodiment contains at least two different catalyst layers, and thereby can more efficiently purify multiple components (typically hydrocarbons (HC), carbon monoxide (CO), and nitrogen oxides (NOₓ)) contained in the exhaust gas.

### <Second Catalyst Layer>

The second catalyst layer according to the embodiment contains Pd and Rh. The second catalyst layer according to the present disclosure purifies hydrocarbons (HC), carbon monoxide (CO), or nitrogen oxides (NOₓ) contained in exhaust gas. The second catalyst layer may contain other precious metals in addition to Pd and Rh. The second catalyst layer preferably contains a precious metal and a porous inorganic oxide or an oxygen storage material, and more preferably contains a precious metal, a porous inorganic oxide, and an oxygen storage material. The second catalyst layer may contain an alkaline earth metal compound.

### (Precious Metal)

The amount of Pd contained in the second catalyst layer is, per 1 liter of the refractory three-dimensional structure, preferably 0.1 g or more and 15.0 g or less, more preferably 0.5 g or more and 10.0 g or less, and further preferably 1.0 g or more and 5.0 g or less. The amount of Rh contained in the second catalyst layer is, per 1 liter of the refractory three-dimensional structure, preferably 0.05 g or more and 5.0 g or less, and further preferably 0.1 g or more and 3.0 g or less, or 0.5 g or more and 1.5 g or less. Hereinafter, unless otherwise described, an amount per 1 liter of the refractory three-dimensional structure is indicated as "g/L". When the amount of Pd and the amount of Rh contained in the second catalyst layer fall within the above ranges, a sufficient catalytic performance can be obtained while suppressing the cost. As a quantitative determination method of metallic elements, known analytical methods can be used. For example, an ICP emission spectroscopy or an X-ray fluorescence analysis can be used.

Precious metal other than Pd and Rh contained in the second catalyst layer may be a precious metal normally used for purifying exhaust gas, and may be platinum (Pt) for example. The precious metal can be appropriately changed and used depending on the subject to be purified. The amount of Pt contained in the second catalyst layer may be, for example, 0.1 g/L or more and 10 g/L or less, preferably 0.5 g/L or more and 5 g/L or less, or 1.0 g/L or more and 3.0 g/L or less. When the amount of Pt contained in the second catalyst layer is 0.1 g/L or more and 10 g/L or less, hydrocarbons or the like can be efficiently oxidized, which is preferable.

### (Porous Inorganic Oxide)

The second catalyst layer preferably contains a porous inorganic oxide other than the Zr-Pr composite oxide. The porous inorganic oxide contained in the second catalyst layer may be a porous inorganic oxide normally used for purifying exhaust gas, and is preferably an alumina (Al₂O₃) of γ, δ, θ, or the like, a titania (TiO₂), a mixture thereof, or a composite oxide thereof.

When considering an effective utilization and durability of the exhaust gas purification catalyst, the porous inorganic oxide contained in the second catalyst layer is preferably an oxide which is porous and has a large specific surface area not only when the exhaust gas is at a low temperature, but also when the exhaust gas is at a high temperature. An average particle size of the porous inorganic oxide is not particularly limited, and considering uniformity of the slurry or the like, the average particle size of the porous inorganic oxide is preferably 0.5 um or more and 100 um or less, more preferably 1 um or more and 50 um or less, and further preferably 2 um or more and 15 µm or less. Here, the "average particle size" in the present description means a volume-based 50% particle size (median diameter, d50) measured by laser diffractometry.

The specific surface area of the porous inorganic oxide contained in the second catalyst layer, when measuring a BET specific surface area using nitrogen gas, may be 30 m²/g or more and 500 m²/g or less, and preferably 70 m²/g or more and 400 m²/g or less. When it is 30 m²/g or more, the precious metal or the oxygen storage material can be efficiently dispersed, which is preferred, and when it is 500 m²/g or less, heat resistance of the porous inorganic oxide is high, which is preferred.

The amount of the porous inorganic oxide contained in the second catalyst layer may be an amount normally used in a catalyst for exhaust gas purification, and is, for example, 1 g/L or more and 150 g/L or less, preferably 10 g/L or more and 100 g/L or less, and more preferably 30 g/L or more and 60 g/L or less. When it is 1 g/L or more, the precious metal or the oxygen storage material can be sufficiently dispersed, so that exhaust gas can be efficiently purified, which is preferred. When it is 150 g/L or less, the back pressure does not increase and the load on the engine is small, which is preferred.

### (Oxygen Storage Material)

The oxygen storage material has a function enabling absorption and adsorption of oxygen in the exhaust gas and releasing it. The oxygen storage material may be an oxygen storage material normally used for purifying exhaust gas. Specifically, a composite oxide of cerium oxide (CeO₂), zirconium oxide (ZrO₂), and a rare earth oxide excluding CeO₂ is preferable for the purpose of improving heat resistance, improving oxygen releasability, or the like. As the rare earth oxide excluding CeO₂, lanthanum oxide (La₂O₃), yttrium oxide (Y₂O₃), neodymium oxide (Nd₂O₃), or praseodymium oxide (Pr₆O₁₁) can be used. For example, a composite oxide containing CeO₂, ZrO₂, La₂O₃, and Y₂O₃ may be used as the oxygen storage material. When the oxygen storage material contains ZrO₂, the CeO₂ concentration of composite oxide containing CeO₂ is preferably more than 0 mass% and 90 mass% or less, more preferably 10 mass% or more and 70 mass% or less, and further preferably 20 mass% or more and 60 mass% or less.

The amount of the oxygen storage material contained in the second catalyst layer may be an amount normally used in a catalyst for exhaust gas purification, and is, for example, 1 g/L or more and 100 g/L or less, preferably 20 g/L or more and 90 g/L or less, and more preferably 40 g/L or more and 60 g/L or less. When it is 1 g/L or more, oxygen in the exhaust gas can be sufficiently absorbed and released, and the catalytic performance can be enhanced, which is preferred. When it is 100 g/L or less, adhesion to the refractory three-dimensional structure is high, which is preferred.

### (Other Components)

The second catalyst layer may contain other components depending on the subject to be purified. For example, the second catalyst layer may contain an inorganic binder to prevent the detachment of a catalyst component from the refractory three-dimensional structure. For example, boehmite, silica gel, and the like can be used as the inorganic binder.

The amount of the second catalyst layer contained in the exhaust gas purification catalyst is not particularly limited, and the second catalyst layer may be 20 g/L or more and 300 g/L or less, preferably 50 g/L or more and 200 g/L or less, and more preferably 80 g/L or more and 150 g/L or less. When the amount of the second catalyst layer is 20 g/L or more and 300 g/L or less, while enabling sufficient catalytic performance, the back pressure does not increase and the load on the engine is small, which is preferred.

### <First Catalyst Layer>

The first catalyst layer according to the embodiment is positioned between the refractory three-dimensional structure and the second catalyst layer, and contains Pd. Another layer may be present between the second catalyst layer and the first catalyst layer. It is preferred that the second catalyst layer and the first catalyst layer are arranged in contact with each other. Another layer may be present between the first catalyst layer and the refractory three-dimensional structure. It is preferred that the first catalyst layer and the refractory three-dimensional structure are arranged in contact with each other.

The first catalyst layer according to the present disclosure purifies hydrocarbons (HC), carbon monoxide (CO), or nitrogen oxides (NOₓ) contained in exhaust gas. The first catalyst layer may contain other precious metals in addition to Pd. The first catalyst layer preferably contains a precious metal and a porous inorganic oxide or an oxygen storage material, and more preferably contains a precious metal, a porous inorganic oxide, and an oxygen storage material. The first catalyst layer preferably contains an alkaline earth metal compound.

### (Precious Metal)

The amount of Pd contained in the first catalyst layer may be 0.5 g/L or more and 15.0 g/L or less, preferably 1.0 g/L or more and 10.0 g/L or less, and further preferably 2.0 g/L or more and 7.0 g/L or less. When the amount of Pd contained in the first catalyst layer is 0.5 g/L or more and 15.0 g/L or less, sufficient catalytic performance can be obtained while suppressing the cost.

Precious metal other than Pd contained in the first catalyst layer may be a precious metal normally used for purifying exhaust gas, and may be Rh and Pt for example. The precious metal can be appropriately changed and used depending on the subject to be purified. The amount of Rh contained in the first catalyst layer may be, for example, 0.01 g/L or more and 5.0 g/L or less, and preferably 0.1 g/L or more and 2.0 g/L or less. When the amount of Rh is 0.01 g/L or more and 5.0 g/L or less, NOₓ can be efficiently reduced, which can be preferred. The amount of Pt contained in the first catalyst layer may be, for example, 0.1 g/L or more and 7 g/L or less, and preferably 0.2 g/L or more and 5 g/L or less. When the amount of Pt is 0.1 g/L or more and 7 g/L or less, hydrocarbons or the like can be efficiently oxidized, which can be preferred.

### (Porous Inorganic Oxide)

The first catalyst layer preferably contains a porous inorganic oxide. The porous inorganic oxide may be the same as in the second catalyst layer, and is preferably an alumina (Al₂O₃) of γ, δ, θ, or the like.

The amount of the porous inorganic oxide contained in the first catalyst layer may be an amount normally used in a catalyst for exhaust gas purification, and is, for example, 1 g/L or more and 150 g/L or less, preferably 10 g/L or more and 100 g/L or less, and more preferably 30 g/L or more and 60 g/L or less. When it is 1 g/L or more, the precious metal or the oxygen storage material can be sufficiently dispersed, so that exhaust gas can be efficiently purified, which is preferred. When it is 150 g/L or less, the back pressure does not increase and the load on the engine is small, which is preferred.

### (Oxygen Storage Material)

The first catalyst layer preferably contains an oxygen storage material. The oxygen storage material contained in the first catalyst layer may be the same as in the second catalyst layer.

The amount of the oxygen storage material contained in the first catalyst layer may be an amount normally used in a catalyst for exhaust gas purification, and is, for example, 1 g/L or more and 100 g/L or less, preferably 20 g/L or more and 80 g/L or less, and more preferably 40 g/L or more and 60 g/L or less. When it is 1 g/L or more, oxygen in the exhaust gas can be sufficiently absorbed and released, and the catalytic performance can be enhanced, which is preferred. When it is 100 g/L or less, the back pressure does not increase and the load on the engine is small, which is preferred.

### (Alkaline Earth Metal Compound)

The first catalyst layer may contain an alkaline earth metal compound. The alkaline earth metal compound may be an oxide, a sulfate, a carbonate, a nitrate, and the like of an alkaline earth metal (such as magnesium, calcium, strontium, and barium), and particularly preferably a sulfate. For example, the sulfate may be one or more selected from a group consisting of magnesium sulfate, calcium sulfate, strontium sulfate, and barium sulfate. The sulfate is preferably a barium sulfate.

When the second catalyst layer contains this alkaline earth metal compound, the amount of alkaline earth metal compound contained in the second catalyst layer may be 0.1 g/L or more and 30 g/L or less, 1 g/L or more and 20 g/L or less, or 5 g/L or more and 15 g/L or less. The alkaline earth metal compound is preferably contained in the first catalyst layer only.

### (Other Components)

As in the case of the second catalyst layer, the first catalyst layer may contain other components depending on the subject to be purified.

The amount of the first catalyst layer is not particularly limited, and the amount of the first catalyst layer contained in the exhaust gas purification catalyst according to one embodiment may be 20 g/L or more and 300 g/L or less, preferably 50 g/L or more and 200 g/L or less, and more preferably 80 g/L or more and 150 g/L or less. When the amount of the first catalyst layer is 20 g/L or more and 300 g/L or less, while enabling sufficient catalytic performance, back pressure does not increase and the load on the engine is small, which is preferred.

### <Zr-Pr Composite Oxide>

The exhaust gas purification catalyst according to the embodiment contains a Zr-Pr composite oxide. The Zr-Pr composite oxide can be prepared by a hydrothermal synthesis method, a solvent evaporation method, a precipitation method, and the like, and it is preferably prepared by a precipitation method.

As a zirconium raw material of the Zr-Pr composite oxide, zirconium nitrate, zirconium oxychloride, zirconium sulfate, and the like can be used, and it is preferred to use zirconium nitrate. As a praseodymium raw material of the Zr-Pr composite oxide, praseodymium nitrate, praseodymium chloride, praseodymium sulfate, and the like can be used, and it is preferred to use praseodymium nitrate.

The precursor of the Zr-Pr composite oxide prepared by the above-described method can be structurally stabilized by being subjected to a drying step and a calcination step. The drying step can be performed using air or nitrogen, and it is preferred to be performed in air. Regarding the temperature during the drying step, the step is preferably performed at a temperature of 70°C or more and 300°C or less, and it is more preferably performed at 100°C or more and 200°C or less. The period of the drying step can be changed depending on an amount of the Zr-Pr composite oxide to be prepared, and is preferably 10 minutes or more and 8 hours or less, more preferably 12 minutes or more and 3 hours or less, and further preferably 15 minutes or more and 1 hour or less.

The Zr-Pr composite oxide prepared by the above-described method may have a single crystal structure or may be a mixture of multiple different oxides. The Zr-Pr composite oxide preferably contains a solid solution in which praseodymium is dissolved into ZrO₂. The crystal structure of the Zr-Pr composite oxide can be examined by an analytical method such as X-ray diffractometry.

The Zr-Pr composite oxide is contained in the first catalyst layer or the second catalyst layer. The Zr-Pr composite oxide may be contained in the first catalyst layer and the second catalyst layer. The Zr-Pr composite oxide is preferably contained in a layer containing both Rh and Pd. Praseodymium (Pr) contained in the Zr-Pr composite oxide can form a Pr-O-Pd bond with Pd. Therefore, when exhaust gas flows through the exhaust gas purification catalyst according to the embodiment, oxygen in the exhaust gas is preferentially incorporated as the Pr-O-Pd bond to suppress the oxidation of Rh. When the oxidation of Rh is suppressed, the catalytic performance of the exhaust gas purification catalyst is improved.

The formation of the Pr-O-Pd bond can also be confirmed by, for example, an X-ray photoelectron spectroscopy (XPS). Specifically, from the amount of peak position shifts for Pr and Pd, the chemical states of Pr and Pd can be understood. A measurement can be performed by using, for example, X'Pert PRO manufactured by Spectris. Regarding Pd-O, the peak of Pd_{3d3/2} appears at 342.2 eV. Meanwhile, when Pr-O-Pd is formed, the peak of Pd_{3d3/2} appears at 342.8 to 342.9. By comparing the peak positions for Pr and Pd with known data or the like, the formation of the Pr-O-Pd bond can be confirmed.

The ratio between zirconium and praseodymium amounts contained in the Zr-Pr composite oxide may be set as desired. Especially, the proportion of mass of praseodymium oxide (in terms of Pr₆O₁₁) contained in the Zr-Pr composite oxide relative to the total mass of zirconium oxide and praseodymium oxide (in terms of ZrO₂ and Pr₆O₁₁) contained in the Zr-Pr composite oxide is preferably 11% or more and 90% or less, more preferably 150 or more and 60% or less, and further preferably 20% or more and 40% or less. When the ratio of mass of praseodymium oxide (in terms of Pr₆O₁₁) contained in the Zr-Pr composite oxide relative to the total mass of zirconium oxide and praseodymium oxide (in terms of ZrO₂ and Pr₆O₁₁) contained in the Zr-Pr composite oxide is 11% or more, the oxidation of Rh can be effectively suppressed, which is preferred. When the ratio is 90% or less, heat resistance of the Zr-Pr composite oxide is improved, which is preferred.

The exhaust gas purification catalyst according to the embodiment may contain any amount of the Zr-Pr composite oxide. Especially, the amount of the Zr-Pr composite oxide contained in the exhaust gas purification catalyst may be 10 g/L or more and 80 g/L or less, preferably 20 g/L or more and 80 g/L or less, more preferably 20 g/L or more and 60 g/L or less, further preferably 20 g/L or more and less than 50 g/L, and particularly preferably 20 g/L or more and 40 g/L or less. When the amount of the Zr-Pr composite oxide is 10 g/L or more, oxygen in exhaust gas can be effectively incorporated, which is preferred. When the amount of the Zr-Pr composite oxide is 80 g/L or less, Pd, Rh, and Pt can be effectively reduced in a reducing atmosphere.

The amount of the Zr-Pr composite oxide in the first catalyst layer or the second catalyst layer containing the Zr-Pr composite oxide is preferably 5 mass% or more and 50 mass% or less, more preferably 10 mass% or more and 40 mass% or less, and further preferably 15 mass% or more and 30 mass% or less. When the amount of the Zr-Pr composite oxide is 5 mass% or more, oxygen in exhaust gas can be effectively incorporated, which is preferred. When the amount of the Zr-Pr composite oxide is 50 mass% or less, functions of other catalyst components are not inhibited, which is preferred.

The Zr-Pr composite oxide may be contained in the first catalyst layer and may be contained in the second catalyst layer. However, in order to trap oxygen in exhaust gas with the Zr-Pr composite oxide as quickly as possible, it is preferred that the second catalyst layer, which directly contacts with the exhaust gas containing oxygen, contains the Zr-Pr composite oxide.

The size of the Zr-Pr composite oxide is not particularly limited, and the Zr-Pr composite oxide has an average particle size of preferably 1 um or more and 50 um or less and more preferably 17 µm or more and 30 µm or less. When the average particle size of the Zr-Pr composite oxide is 1 um or more, stability of the Zr-Pr composite oxide is improved, which is preferred. When the average particle size of the Zr-Pr composite oxide is 50 um or less, the Zr-Pr composite oxide is highly dispersed in the catalyst, which is preferred.

### [Method for Purifying Exhaust Gas]

A method for purifying exhaust gas according to one embodiment includes using the exhaust gas purification catalyst according to the present disclosure. The method for purifying exhaust gas according to the embodiment may include a step of bringing the exhaust gas purification catalyst into contact with exhaust gas.

The method for purifying exhaust gas according to the embodiment may be used for purifying exhaust gas from internal combustion engines such as gasoline engines and hybrid engines, and may be especially used for purifying exhaust gas from gasoline engines. The exhaust gas may be supplied to the exhaust gas purification catalyst at a space velocity of 1000 h⁻¹ or more and 500000 h⁻¹ or less, preferably supplied at a space velocity of 5000 tr1 or more and 300000 h⁻¹ or less, and more preferably supplied at a space velocity of 10000 h⁻¹ or more and 200000 h⁻¹ or less.

The air-fuel ratio (A/F) of exhaust gas according to the embodiment is preferably 11 or more and 20 or less, more preferably 13 or more and 18 or less, and further preferably 14.1 or more and 15.1 or less. When the A/F is 11 or more, reducing gas in the exhaust gas such as CO or HC enhances the reduction of Rh or keeps the reduced state thereof, and therefore the catalyst of the invention can suitably exhibit its effect. When the A/F is 20 or less, the catalyst of the invention can suitably exhibit its effect while suppressing poisoning due to oxygen.

In the method for purifying exhaust gas according to the embodiment, exhaust gas at a high temperature may be supplied to exhibit the purification performance of the catalyst. For example, exhaust gas of 50°C or more and 1000°C or less may be supplied to the catalyst, and exhaust gas of 250°C or more and 400°C or less is preferably supplied. When exhaust gas at such a temperature is supplied, the exhaust gas can be purified with high efficiency while suppressing thermal deterioration of the catalyst.

### [Method for Producing Exhaust Gas Purification Catalyst]

The method for producing an exhaust gas purification catalyst according to the embodiment includes a first step and a second step. In the first step, a first slurry is applied on a surface of a refractory three-dimensional structure and the applied first slurry is dried and calcined to form a first catalyst layer. In the second step, a second slurry is applied on a surface of the first catalyst layer and the applied second slurry is dried and calcined to form a second catalyst layer.

Hereinafter, a preferred embodiment of the method for producing the catalyst of the invention will be described. However, the invention is not limited to the following preferred embodiment.

Namely, the Zr-Pr composite oxide, the precious metal, the porous inorganic oxide, the oxygen storage material, and the alkaline earth metal compound according to the present disclosure, and if necessary, other components as described above and an aqueous medium are appropriately weighed and mixed according to the desired composition, followed by stirring at 5 to 95°C for 0.5 to 24 hours (and if necessary, wet milling after stirring), thereby preparing a slurry. Here, as the aqueous medium, water (such as pure water, ultrapure water, deionized water, or distilled water), a lower alcohol, an organic alkaline aqueous solution, or the like can be used. Among them, it is preferred to use water or a lower alcohol, and it is more preferred to use water. The amount of the aqueous medium is not particularly limited, and is preferably such an amount that the ratio of solid content (solid mass concentration) in the slurry is 10 to 60 mass% and more preferably 30 to 50 mass%.

Subsequently, the slurry prepared as above is applied to the three-dimensional structure. As a method of applying the slurry on the three-dimensional structure, a known method such as washcoating can be appropriately adopted. Further, the application amount of the slurry can be appropriately set by those skilled in the art according to the amount of a solid matter in the slurry and the thickness of a catalyst layer to be formed. The application amount of the slurry is preferably such an amount that each of the components meets the amount (supported amount) as described above.

Subsequently, the three-dimensional structure, after applying the slurry thereto as described above, is dried in air preferably at a temperature of 70 to 200°C for 5 minutes to 5 hours. Subsequently, the thus obtained dried slurry coating film (catalyst precursor layer) is calcined in air at a temperature of 400°C to 900°C for 10 minutes to 3 hours. Under such conditions, the Zr-Pr composite oxide, the precious metal, the porous inorganic oxide, the oxygen storage material, and the alkaline earth metal compound according to the present disclosure, and if necessary, other components as described above can be efficiently adhered onto the three-dimensional structure.

This process can be used to produce the catalyst of the invention.

The embodiments of the invention are described above in detail referring to the figures, but each of the configurations in the embodiments, combinations thereof, and the like are examples, and additions, omissions, substitutions, and other changes of the configurations are possible in a scope not departing from the gist of the invention.

### Examples

### <Preparation of Zr-Pr Composite Oxide>

Zirconium nitrate dihydrate and praseodymium nitrate hexahydrate were measured so that a mass ratio of Zr:Pr in terms of oxides (in terms of ZrO₂ and Pr₆O₁₁) were 70:30, and were dissolved in water. While stirring the aqueous solution, aqueous ammonia was added to the aqueous solution, followed by performing neutralization hydrolysis to obtain a slurry. The obtained slurry was filtered, washed with water, and dried in air at 150°C for 15 minutes. Thereafter, calcination was performed in air at 550°C for 1 hour to obtain a Zr-Pr composite oxide (ZP1). The average particle size (d50) of ZP1 measured by a laser diffractometry was 18 µm.

A Zr-Pr composite oxide (ZP2) was obtained in the same manner as ZP1 except for changing the mass ratio of Zr:Pr to 90:10.

A Zr-Pr composite oxide (ZP3) was obtained in the same manner as ZP1 except for changing the mass ratio of Zr:Pr to 50:50.

In this manner, three types of Zr-Pr composite oxides (ZP1, ZP2, and ZP3) having different Zr:Pr mass ratios were prepared. The average particle size (d50) of ZP2 was 16 um and the average particle size (d50) of ZP3 was 21 um.

On the obtained Zr-Pr composite oxides ZP1, ZP2, and ZP3, Pd was supported via palladium nitrate. The obtained Zr-Pr composite oxide supporting Pd were subjected to an XPS measurement. Specifically, a narrow scanning was performed using X'Pert PRO manufactured by Spectris and using Cu Kα ray at 45 kV and 40 mA in a range of 320 to 355 eV. Regarding Pd-O, the peak of Pd_{3d3/2} appears at 342.2 eV. In the cases of ZP1 and ZP3 supporting Pd, the peak of Pd_{3d3/2} was detected at 342.8 to 342.9, while in the case of ZP2, the peak was detected at 342.2 eV. From the above, it was confirmed that Pr-O-Pd was formed in ZP1 and ZP3.

### [Example 1]

### <Production of Exhaust Gas Purification Catalyst>

A composite oxide (Ce-Zr composite oxide, indicated as CZ in Table 1) containing cerium oxide (CeO₂), zirconium oxide (ZrO₂), lanthanum oxide (La₂O₃), and yttrium oxide (Y₂O₃) in a mass ratio of 24:60:3.5:12.5 was prepared. Subsequently, using palladium nitrate, the Ce-Zr composite oxide, aluminum oxide (alumina, Al₂O₃), and barium sulfate (BaSO₄), each of the raw materials was weighed so that they met the mass ratio of the first catalyst layer (A) in Table 1 after calcination. Here, the average particle size of aluminum oxide used was 5 um and the BET specific surface area thereof was 172.4 m²/g. The average particle size of the Ce-Zr composite oxide was 11 µm. Palladium nitrate, the Ce-Zr composite oxide, aluminum oxide, and barium sulfate, which had been weighed, were dispersed in water so that the amount of the solid components was 40 mass% relative to the whole slurry, to obtain a dispersion solution. The obtained dispersion solution was stirred with a three-one motor for 20 minutes and wet-milled with a ball mill for 15 minutes to prepare the first slurry. The average particle size (d50) of the first slurry was 4.5 µm.

Subsequently, rhodium nitrate, palladium nitrate, ZP1 as the Zr-Pr composite oxide (indicated as ZrPr in Table 1), the Ce-Zr composite oxide, and aluminum oxide were weighed so that they met the mass ratio of the second catalyst layer (A) in Table 1 after calcination. Rhodium nitrate, palladium nitrate, ZP1, the Ce-Zr composite oxide, and aluminum oxide, which had been weighed, were dispersed in water so that the amount of the solid components was 40 mass% relative to the whole slurry, to obtain a dispersion solution. The obtained dispersion solution was stirred with a three-one motor for 20 minutes and wet-milled with a ball mill for 15 minutes to prepare the second slurry. The average particle size (d50) of the second slurry was 5.5 µm.

Subsequently, a refractory three-dimensional structure made of cordierite, having a diameter of 118 mm, a length of 91 mm, a cylindrical shape, 600 cells per 1 square inch, rectangular cell shape, and a cell wall thickness of 3 mil was prepared.

The first slurry was applied onto the refractory three-dimensional structure, followed by drying in an air atmosphere at 150°C for 15 minutes and calcining in an air atmosphere at 550°C for 1 hour to form the first catalyst layer. The amount of the first catalyst layer was 115.5 g/L per 1 liter of the refractory three-dimensional structure.

Subsequently, the second slurry was applied onto the first catalyst layer, followed by drying and calcining similarly to the first slurry, to form the second catalyst layer. The amount of the second catalyst layer was 120.09 g/L per 1 liter of the refractory three-dimensional structure. In this manner, an exhaust gas purification catalyst A was obtained.

### [Example 2]

An exhaust gas purification catalyst B was produced in the same manner as in Example 1 except for using ZP2 (mass ratio of Zr:Pr was 90:10) instead of ZP1 as the Zr-Pr composite oxide.

### [Example 3]

An exhaust gas purification catalyst C was produced in the same manner as in Example 1 except for using ZP3 (mass ratio of Zr:Pr was 50:50) instead of ZP1 as the Zr-Pr composite oxide.

### [Example 4]

An exhaust gas purification catalyst D was produced in the same manner as in Example 1 except for adjusting Rh:Pd:ZP1:Ce-Zr composite oxide:aluminum oxide in the second slurry so that they met the mass ratio of the second catalyst layer (D) in Table 1 after calcination.

### [Example 5]

An exhaust gas purification catalyst E was produced in the same manner as in Example 1 except for adjusting Rh:Pd:ZP1:Ce-Zr composite oxide:aluminum oxide in the second slurry so that they met the mass ratio of the second catalyst layer (E) in Table 1 after calcination.

### [Comparative Example 1]

An exhaust gas purification catalyst F was produced in the same manner as in Example 1 except for adjusting Rh:Pd:ZP1:Ce-Zr composite oxide:aluminum oxide in the second slurry so that they met the mass ratio of the second catalyst layer (F) in Table 1 after calcination. Namely, the second slurry in Comparative Example 1 contained no Zr-Pr composite oxide.

### [Example 6]

An exhaust gas purification catalyst G was produced in the same manner as in Example 1 except for changing the first slurry so that it contained palladium nitrate, ZP1, the Ce-Zr composite oxide, aluminum oxide, and barium sulfate at the mass ratio of the first catalyst layer (G) in Table 1 after calcination, and adjusting Rh:Pd:ZP1:Ce-Zr composite oxide:aluminum oxide in the second slurry so that they met the mass ratio of the second catalyst layer (G) in Table 1 after calcination. Namely, in Example 6, the first slurry contained the Zr-Pr composite oxide and the second slurry contained no Zr-Pr composite oxide.

### [Comparative Example 2]

An exhaust gas purification catalyst H was produced in the same manner as in Example 1 except for adjusting Pd:Ce-Zr composite oxide:aluminum oxide:barium sulfate in the first slurry so that they met the mass ratio of the first catalyst layer (H) in Table 1 after calcination, and adjusting Rh:Pd:ZP1:Ce-Zr composite oxide:aluminum oxide in the second slurry so that they met the mass ratio of the second catalyst layer (H) in Table 1 after calcination. Namely, the second slurry in Comparative Example 2 contained no Pd.

### [Comparative Example 3]

An exhaust gas purification catalyst I was produced in the same manner as in Example 1 except for adjusting Pd:Ce-Zr composite oxide:aluminum oxide:barium sulfate in the first slurry so that they met the mass ratio of the first catalyst layer (I) in Table 1 after calcination, and adjusting Rh:Pd:ZP1:Ce-Zr composite oxide:aluminum oxide in the second slurry so that they met the mass ratio of the second catalyst layer (I) in Table 1 after calcination. Namely, the second slurry in Comparative Example 3 contained neither Pd nor Zr-Pr composite oxide.

### [Example 7]

An exhaust gas purification catalyst J was produced in the same manner as in Example 1 except for adjusting Pd:Ce-Zr composite oxide:aluminum oxide:barium sulfate in the first slurry so that they met the mass ratio of the first catalyst layer (J) in Table 1 after calcination, and adjusting Rh:Pd:ZP1:Ce-Zr composite oxide:aluminum oxide in the second slurry so that they met the mass ratio of the second catalyst layer (J) in Table 1 after calcination.

Regarding the exhaust gas purification catalysts prepared in Examples and Comparative Examples, masses of components supported per 1 L volume of the refractory three-dimensional structure are shown in the following table (Table 1). The unit for numerical values is [g/L].

**[Table 1]**

| First catalyst layer | | | | | | |
|---|---|---|---|---|---|---|
| | Pd | ZrPr | CZ | Al₂O₃ | BaSO₄ | Total |
| Example 1 (A) | 4.6 | 0 | 49.47 | 49.47 | 11.96 | 115.5 |
| Example 2 (B) | 4.6 | 0 | 49.47 | 49.47 | 11.96 | 115.5 |
| Example 3 (C) | 4.6 | 0 | 49.47 | 49.47 | 11.96 | 115.5 |
| Example 4 (D) | 4.6 | 0 | 49.47 | 49.47 | 11.96 | 115.5 |
| Example 5 (E) | 4.6 | 0 | 49.47 | 49.47 | 11.96 | 115.5 |
| Comparative Example 1 (F) | 4.6 | 0 | 49.47 | 49.47 | 11.96 | 115.5 |
| Example 6 (G) | 4.6 | 30 (ZP1) | 49.47 | 19.47 | 11.96 | 115.5 |
| Comparative Example 2 (H) | 6.2 | 0 | 49.47 | 49.47 | 11.96 | 117.1 |
| Comparative Example 3 (I) | 6.2 | 0 | 49.47 | 49.47 | 11.96 | 117.1 |
| Example 7 (J) | 5.4 | 0 | 49.47 | 49.47 | 11.96 | 116.3 |

| Second catalyst layer | | | | | | |
|---|---|---|---|---|---|---|
| | Rh | Pd | ZrPr | CZ | Al₂O₃ | Total |
| Example 1 (A) | 0.8 | 1.6 | 30 (ZP1) | 54.78 | 32.91 | 120.09 |
| Example 2 (B) | 0.8 | 1.6 | 30 (ZP2) | 54.78 | 32.91 | 120.09 |
| Example 3 (C) | 0.8 | 1.6 | 30 (ZP3) | 54.78 | 32.91 | 120.09 |
| Example 4 (D) | 0.8 | 1.6 | 10 (ZP1) | 54.78 | 52.91 | 120.09 |
| Example 5 (E) | 0.8 | 1.6 | 50 (ZP1) | 54.78 | 12.91 | 120.09 |
| Comparative Example 1 (F) | 0.8 | 1.6 | 0 | 54.78 | 62.91 | 120.09 |
| Example 6 (G) | 0.8 | 1.6 | 0 | 54.78 | 62.91 | 120.09 |
| Comparative Example 2 (H) | 0.8 | 0 | 30 (ZP1) | 54.78 | 32.91 | 118.49 |
| Comparative Example 3 (I) | 0.8 | 0 | 0 | 54.78 | 62.91 | 118.49 |
| Example 7 (J) | 0.8 | 0.8 | 30 (ZP1) | 54.78 | 32.91 | 119.29 |

Regarding exhaust gas purification catalysts A to J, amounts of the Zr-Pr composite oxide in the first catalyst layer and the second catalyst layer are organized as in the following table (Table 2). The unit for numerical values is [mass%].

**[Table 2]**

| | First catalyst layer | Second catalyst layer |
|---|---|---|
| Example 1 (A) | 0 | 25.0 |
| Example 2 (B) | 0 | 25.0 |
| Example 3 (C) | 0 | 25.0 |
| Example 4 (D) | 0 | 8.3 |
| Example 5 (E) | 0 | 41.6 |
| Comparative Example 1 (F) | 0 | 0 |
| Example 6 (G) | 26.0 | 0 |
| Comparative Example 2 (H) | 0 | 25.3 |
| Comparative Example 3 (I) | 0 | 0 |
| Example 7 (J) | 0 | 25.1 |

### <Thermal Aging>

The exhaust gas purification catalysts produced above were subjected to thermal aging. The thermal aging assumed a deterioration of the exhaust gas purification catalyst. The temperature of a tube furnace was set so that the temperature at a catalyst bed part (the center 1 inch away from an end face on a catalyst inlet side) reached 1000°C. While having nitrogen gas containing 10 volume% of water vapor flow through the exhaust gas purification catalyst, the system was kept at 1000°C for 10 hours to perform thermal aging.

### <Measurement of Light-Off Temperature>

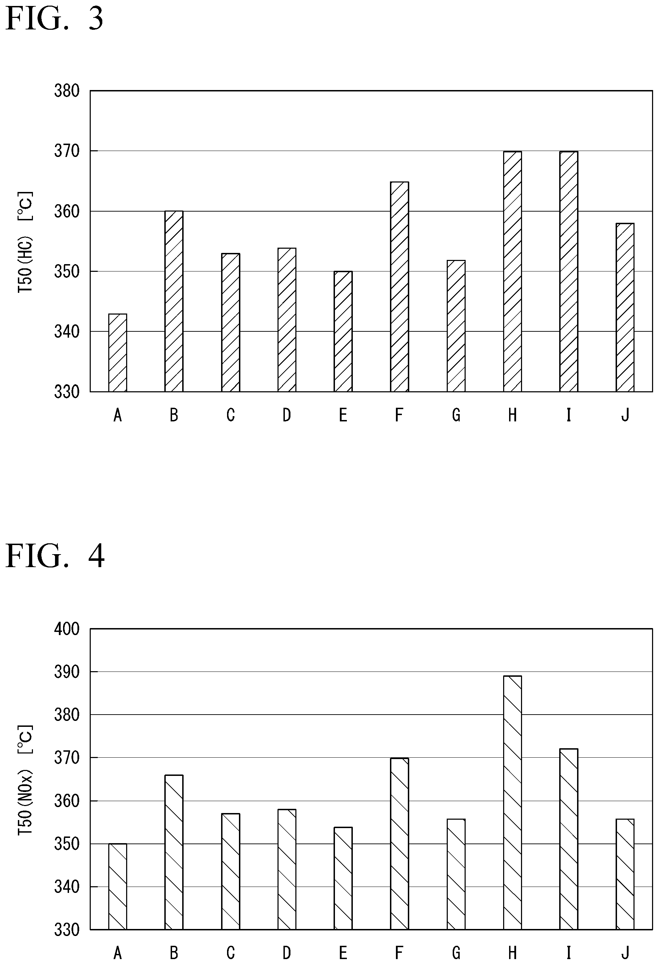

Exhaust gas purification performance of the exhaust gas purification catalysts according to the Examples and Comparative Examples after thermal aging was measured by a warm-up evaluation. Each of the catalysts was placed on the downstream side 30 cm away from an exhaust port of an inline six-cylinder, two-liter engine. Exhaust gas was supplied to the catalyst for exhaust gas purification under the conditions of an air-fuel ratio (A/F) = 14.6±0.5, A/F fluctuation rate = 1 Hz, and space velocity (SV) = 150000 (h⁻¹). The temperature of the catalyst was raised from 150°C to 500°C at a temperature raising rate of 50°C/minute. When the temperature of the catalyst was raised, the temperature of the exhaust gas was measured by a thermocouple placed at a position 15 cm away from the end face on the exhaust gas inlet side of the catalyst. Composition of the exhaust gas before passing through the catalyst and the exhaust gas after passing through the catalyst were analyzed, and thereby T50 that is the temperature at which the purification rate of carbon monoxide (CO), hydrocarbons (HC), and nitrogen oxides (NOₓ) reaches 50% was obtained. A lower T50 temperature means higher purification performance of the catalyst. The results are shown in the following table (Table 3). T50 regarding carbon monoxide (CO), hydrocarbons (HC), and nitrogen oxides (NOₓ) are shown in Fig. 2 to Fig. 4, respectively. Referring to the measurement results, it can be understood that exhaust gas purification catalysts according to Examples have lower T50s than the exhaust gas purification catalysts according to Comparative Examples.

### <Analysis by Temperature Programmed Reaction Method (TPR Method)>

In order to examine the surface state of the catalyst, the exhaust gas purification catalysts according to Examples and Comparative Examples after thermal aging were analyzed by temperature programmed reaction method (TPR method). By TPR method, especially the reduced state of the catalyst surface can be analyzed. Specifically, 0.1 g of catalyst layer part of the catalyst after thermal aging was filled into a quartz reaction tube, and the tube was attached to a commercially available gas adsorption/catalyst analyzer (BELCAT II). The analyzed catalyst layer contained the first catalyst layer and the second catalyst layer in the same mass ratio as the mass ratio in the catalyst. While supplying O₂ gas (100%) to the quartz reaction tube at 50 mL/minute, an oxidation treatment was performed at 500°C for 30 minutes. Subsequently, while supplying N₂ gas containing 1 volume% of CO at 50 mL/minute, the temperature was raised from 50°C to 800°C, and the amount of CO₂ (CO₂ production amount) discharged from the quartz reaction tube was measured with a mass spectrometer. An integrated value from 200°C to 600°C is shown in the following table (Table 3). The unit for numerical values is [mg].

**[Table 3]**

| | T50 (CO) [°C] | T50 (HC) [°C] | T50 (NOₓ) [°C] | CO₂ production amount [mg] |
|---|---|---|---|---|
| Example 1 (A) | 349 | 343 | 350 | 0.47 |
| Example 2 (B) | 367 | 360 | 366 | 0.33 |
| Example 3 (C) | 357 | 353 | 357 | 0.43 |
| Example 4 (D) | 361 | 354 | 358 | 0.40 |
| Example 5 (E) | 355 | 350 | 354 | 0.44 |
| Comparative Example 1 (F) | 372 | 365 | 370 | 0.29 |
| Example 6 (G) | 356 | 352 | 356 | 0.45 |
| Comparative Example 2 (H) | 382 | 370 | 389 | 0.26 |
| Comparative Example 3 (I) | 375 | 370 | 372 | 0.30 |
| Example 7 (i) | 362 | 358 | 356 | 0.38 |

Referring to the measurement results by TPR method, it can be understood that exhaust gas purification catalysts according to Examples have higher CO₂ production amount than the exhaust gas purification catalysts according to Comparative Examples. This can be understood as follows. Namely, in the analysis by TPR method, mainly the amount of oxygen bonded to the catalyst surface through the oxidation treatment at 500°C is measured as the CO₂ production amount. Therefore, a large CO₂ production amount corresponds to a large amount of oxygen bonded to the catalyst surface through the oxidation treatment at 500°C. When the catalyst is in a reduced state, the amount of oxygen bonded by the oxidation treatment increases. Therefore, it can be understood that the larger the CO₂ production amount in TPR method is, the more of a reduced state the catalyst has been in prior to the oxidation treatment. Considering the analysis results by TPR method and the measurement results of the light-off temperature, it can be considered that the catalysts according to Examples had a lowered light-off temperature since they were in a reduced state.

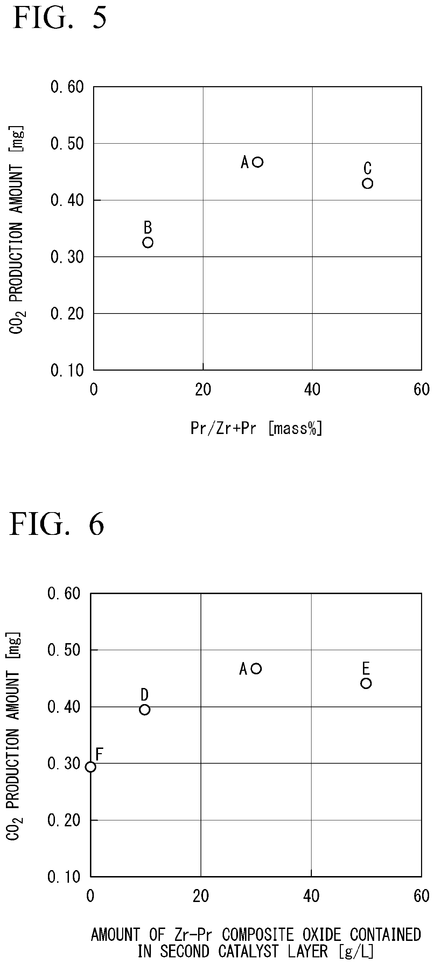

A figure in which the measurement results of the exhaust gas purification catalysts A, B, and C by TPR method are organized regarding the proportion (Pr/Zr+Pr) of the mass of the oxide of praseodymium (in terms of Pr₆O₁₁) contained in the Zr-Pr composite oxide relative to the total mass of zirconium oxide and praseodymium oxide (in terms of ZrO₂ and Pr₆O₁₁) contained in the Zr-Pr composite oxide is shown as Fig. 5. Referring to Fig. 5, the CO₂ production amount changes so that it has a peak relative to Pr/Zr+Pr. Therefore, the reduced state of the catalyst and the light-off temperature can be optimized by adjusting Pr/Zr+Pr.

A figure in which the measurement results of the exhaust gas purification catalysts A, D, E, and F by TPR method are organized regarding the amount of the Zr-Pr composite oxide contained in the second catalyst layer is shown as Fig. 6. Referring to Fig. 6, the CO₂ production amount changes so that it has a peak relative to the amount of the Zr-Pr composite oxide contained in the second catalyst layer. Therefore, the reduced state of the catalyst and the light-off temperature can be optimized by adjusting the amount of the Zr-Pr composite oxide contained in the second catalyst layer.

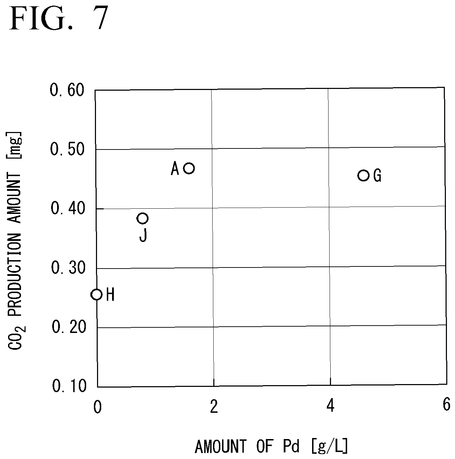

A figure in which the measurement results of the exhaust gas purification catalysts A, G, H, and J by TPR method are organized regarding the amount of Pd contained in the catalyst layer (the first catalyst layer or the second catalyst layer) containing the Zr-Pr composite oxide is shown as Fig. 7. Referring to Fig. 7, the CO₂ production amount changes so that it has a peak relative to the amount of Pd contained in the catalyst layer (the first catalyst layer or the second catalyst layer) containing the Zr-Pr composite oxide. Therefore, the reduced state of the catalyst and the light-off temperature can be optimized by adjusting the amount of Pd.

### Industrial Applicability

The exhaust gas purification catalyst according to the present disclosure has an improved light-off performance.

In the method for purifying exhaust gas according to the present disclosure, the light-off temperature is lowered.

The method for producing an exhaust gas purification catalyst according to the present disclosure can provide an exhaust gas purification catalyst having an improved light-off performance.

### Reference Sign List

- 10: Exhaust gas purification catalyst
- 20: Refractory three-dimensional structure
- 31: Second catalyst layer
- 32: First catalyst layer

## Claims

1. An exhaust gas purification catalyst comprising:
a refractory three-dimensional structure;
a second catalyst layer containing palladium and rhodium; and
a first catalyst layer containing palladium positioned between the refractory three-dimensional structure and the second catalyst layer,
wherein the first catalyst layer or the second catalyst layer further contains a Zr-Pr composite oxide that is a composite oxide of zirconium and praseodymium.

2. The exhaust gas purification catalyst according to claim 1, wherein a proportion of mass of praseodymium oxide (in terms of Pr₆O₁₁) contained in the Zr-Pr composite oxide relative to a total mass of zirconium oxide and praseodymium oxide (in terms of ZrO₂ and Pr₆O₁₁) contained in the Zr-Pr composite oxide is 11% or more and 90% or less.

3. The exhaust gas purification catalyst according to claim 1 or 2, wherein
an amount of palladium contained in the second catalyst layer is 0.1 g or more and 15.0 g or less per 1 liter of the refractory three-dimensional structure,
an amount of rhodium contained in the second catalyst layer is 0.05 g or more and 5.0 g or less per 1 liter of the refractory three-dimensional structure, and
an amount of palladium contained in the first catalyst layer is 0.5 g or more and 15.0 g or less per 1 liter of the refractory three-dimensional structure.

4. The exhaust gas purification catalyst according to any one of claims 1 to 3, wherein an amount of the Zr-Pr composite oxide is 10 g or more and 80 g or less per 1 liter of the refractory three-dimensional structure.

5. The exhaust gas purification catalyst according to any one of claims 1 to 4, wherein the amount of the Zr-Pr composite oxide in the first catalyst layer or the second catalyst layer containing the Zr-Pr composite oxide is 5 mass% or more and 50 mass% or less.

6. The exhaust gas purification catalyst according to any one of claims 1 to 5, wherein the second catalyst layer contains the Zr-Pr composite oxide.

7. A method for purifying exhaust gas, comprising using the exhaust gas purification catalyst according to any one of claims 1 to 6.

8. A method for producing the exhaust gas purification catalyst according to any one of claims 1 to 6, comprising:
a first step of applying a first slurry on a surface of a refractory three-dimensional structure and drying and calcining the applied first slurry to form a first catalyst layer; and
a second step of applying a second slurry on a surface of the first catalyst layer and drying and calcining the applied second slurry to form a second catalyst layer,
wherein
the first slurry contains a palladium compound,
the second slurry contains a palladium compound and a rhodium compound, and
the first slurry or the second slurry further contains a Zr-Pr composite oxide that is a composite oxide of zirconium and praseodymium.
